# FASCICULE DE BREVET EUROPEEN

(11) **EP 3 085 162 B1**
(45) Date de publication et mention de la délivrance du brevet: **18.04.2018**
(21) Numéro de dépôt: 14815650.8
(22) Date de dépôt: 15.12.2014
(51) Int. Cl.: H04W 48/08, H04W 48/20, H04W 52/16, H04W 52/50, H04W 52/32, H04L 12/26, H04W 84/12, H04W 52/14

(54) **SYSTÈME DE RADIOCOMMUNICATION COMPORTANT DES MOYENS D'ASSOCIATION D'UN TERMINAL DE RADIOCOMMUNICATION AVEC UNE STATION DE RADIOCOMMUNICATION, STATION ET TERMINAL DE RADIOCOMMUNICATION ET PROCÉDÉ D'ASSOCIATION**
FUNKKOMMUNIKATIONSSYSTEM MIT VORRICHTUNG ZUR ZUORDNUNG EINES FUNKKOMMUNIKATIONSENDGERÄTS ZU EINER FUNKKOMMUNIKATIONSSTATION, FUNKFUNKKOMMUNIKATIONSSTATION, FUNKKOMMUNIKATIONSENDGERÄT UND ZUORDNUNGSVERFAHREN
RADIO-COMMUNICATION SYSTEM INCLUDING MEANS FOR ASSOCIATING A RADIO-COMMUNICATION TERMINAL WITH A RADIO-COMMUNICATION STATION, RADIO-COMMUNICATION STATION, RADIO-COMMUNICATION TERMINAL AND ASSOCIATION METHOD

(30) Priorité: 16.12.2013 FR 1362692
(43) Date de publication de la demande: 26.10.2016
(73) Titulaire: Sagemcom Broadband SAS, 92500 Rueil-Malmaison (FR)
(72) Inventeur: JAULIN, Jean-Philippe, F-92500 Rueil Malmaison (FR)
(74) Mandataire: Le Guen-Maillet
(86) Numéro de dépôt international: PCT/EP2014/077698
(87) Numéro de publication internationale: WO 2015/091327

(56) Documents cités:
- WO-A2-2009/064932
- US-A1- 2009 093 232
- US-A1- 2010 016 022
- US-A1- 2010 048 212
- "Digital Enhanced Cordless Telecommunications (DECT); Common Interface (CI); Part 5: Network (NWK) layer; ETSI EN 300 175-5", IEEE, LIS, SOPHIA ANTIPOLIS CEDEX, FRANCE, vol. DECT, no. V2.1.8, 1 mars 2008 (2008-03-01), XP014040836, ISSN: 0000-0001 cité dans la demande
- "Digital Enhanced Cordless Telecommunications (DECT); Common Interface (CI); Part 3: Medium Access Control (MAC) layer; Final draft ETSI EN 300 175-3", IEEE, LIS, SOPHIA ANTIPOLIS CEDEX, FRANCE, vol. DECT, no. V2.0.1, 1 mars 2007 (2007-03-01), XP014037318, ISSN: 0000-0001 cité dans la demande

## Description

La présente invention concerne un procédé d'association d'un terminal de radiocommunication avec une station de radiocommunication d'un système de radiocommunication, ainsi qu'un système de radiocommunication comprenant au moins une station de radiocommunication et au moins un terminal de radiocommunication pour la mise en oeuvre dudit procédé. La présente invention concerne également une station de radiocommunication ainsi qu'un terminal de radiocommunication respectivement prévus pour la mise en oeuvre dudit procédé d'association.

L'établissement d'une communication entre une station de radiocommunication, telle qu'une station de base d'un système de radiocommunication (DECT, Bluetooth, ZigBee, Wi-Fi ou autre) et un terminal de radiocommunication, par exemple mobile, dudit système de radiocommunication, nécessite l'exécution préalable d'une opération d'association entre eux, opération mise en oeuvre une fois pour toutes. Cette opération d'association comporte entre autres l'échange de messages contenant des informations, telles que des clefs de sécurité et des identifiants, et l'enregistrement de ces informations et d'autres dans la station de radiocommunication et dans le terminal. Ces identifiants et clefs de sécurité sont nécessaires à l'établissement de chacune des communications radio.

Pour lancer l'exécution de cette opération d'association, les procédés d'association selon l'état de la technique imposent généralement une intervention active de l'utilisateur sur le terminal de radiocommunication, et, souvent aussi, sur la station de radiocommunication.

Pour illustrer ce point, on décrit ci-après cette opération d'association dans le cas où le système de radiocommunication en question est le système DECT (Digital Enhanced Cordless Télécommunication : Télécommunication numérique améliorée sans fil) qui est décrit dans les normes ETSI EN 300 175 parties 1 à 8 et ETSI EN 300 444.

Dans ce système DECT, une station de base comporte des moyens pour émettre des signaux de balise qui servent à la transmission d'informations-système et à la synchronisation des terminaux de radiocommunication qui ont été préalablement associés. Ces signaux de balise sont portés par un canal d'information-système Q du service BMC (Broadcast Message Control : service de contrôle de message diffusé). Certains de ces signaux de balise portent une information d'association qui signale la disponibilité ou non de la station de base pour exécuter une opération d'association. Ces signaux de balise portent, en l'occurrence, un message dit Q3 (message Q_{H} dont l'en-tête H est égal à 3 pour des messages concernant des capacités de la partie fixe, en l'occurrence la station de base (Voir ETSI EN 300 175-3, notamment les chapitres 5.2.2, 5.3.4.1 et 7.2.3.4)). Quant à l'information d'association, elle est portée par le bit a44 (voir annexe F.1 de ETSI EN 300 175-5 relative aux capacités des plus hautes couches (Higher layer capabilities)) qui, positionné à 0, signale que la station de base n'est pas disponible pour une opération d'association (en particulier, la station de base n'accepte pas de requête d'association émanant d'un terminal de radiocommunication), alors que positionné à 1, il signale au contraire que la station de base est disponible pour l'opération d'association (la station de base accepte toute requête émanant d'un terminal).

Un procédé d'association est décrit dans l'annexe A de la norme ETSI EN 300 444. Il comporte alors les étapes suivantes :
Une première étape dans laquelle l'utilisateur par une action volontaire sur la station de base (par exemple, appui sur une touche, ou sélection d'un menu) permet de positionner, pour une durée prédéterminée, la station de base dans un mode où elle est disponible pour exécuter ladite opération d'association. A ce moment, les signaux de balise (par exemple, portant des messages Q3) sont émis avec l'information d'association signalant que la station de base est disponible pour une opération d'association (bit a44 = 1).
Dans une seconde étape, l'utilisateur, également par une action volontaire (par exemple, activation d'un menu particulier) maintenant sur le terminal de radiocommunication qu'il souhaite associer à la station de base positionne ledit terminal de radiocommunication dans un mode de tentative d'association. A partir de ce moment, ce terminal recherche un signal de balise dont l'information d'association signale la disponibilité de la station de base (signal de balise Q3 avec bit a44 positionné à 1). Pour ce faire, il analyse chacun des canaux émis par la station de base, puis, après détection d'une émission sur un canal, chacun des créneaux temporels contenant un paquet radio contenant ledit signal de balise.
Dans une troisième étape, le terminal mobile, une fois reçu un signal de balise avec une information d'association signalant la disponibilité de la station de base (message Q3 avec le bit a44 à 1), lance l'exécution de l'opération d'association.

Pour ce faire, il émet à destination de la station de base une requête d'association (ACCESS-RIGHT-REQUEST). A la réception de cette requête d'association, la station de base transmet au terminal mobile une requête d'allocation de clef (KEY-ALLOCATION). Le traitement de cette dernière requête comporte essentiellement la génération de clefs de sécurité de part et d'autre, la vérification de la correspondance de ces clefs, et l'échange de messages particuliers. Une fois le traitement de cette requête effectué avec succès, la station de base stocke en mémoire, l'identifiant du terminal mobile ainsi que la clef de sécurité générée. Enfin, elle transmet au terminal mobile un message afin d'accepter la finalisation de l'association (ACCESS-RIGHT-ACCEPT). A la réception de ce dernier message, le terminal mobile stocke en mémoire l'identifiant de la station de base ainsi que la clef de sécurité générée à l'étape précédente.

Enfin, la station de base positionne maintenant, dans les signaux de balise portant l'information d'association qu'elle émet, le bit d'association a44 à 0 (l'information d'association signale maintenant que la station de base n'est pas disponible pour l'exécution d'une opération d'association).

Comme on peut le constater, cette opération d'association est déclenchée par une ou plusieurs actions de l'utilisateur sur au moins un des deux dispositifs. Elle impose l'utilisation de menus et sous-menus, la rendant parfois peu intuitive, si bien qu'elle peut s'avérer complexe pour un utilisateur non averti. Cette opération peut aussi être conçue comme complexe à un utilisateur non familier de technologie.

Les messages émis par les opérations décrites précédemment étant transmis au moyen de la liaison radio dont la puissance peut être de plusieurs dizaines de milliwatts, ces opérations sont réalisables alors que la station de base et le terminal mobile sont éloignés de plusieurs dizaines à quelques centaines de mètres. Une station de base disponible pour une opération d'association (bit d'association a44 = 1) peut ainsi recevoir une requête d'association d'un autre terminal mobile éloigné. De même, un terminal mobile à la recherche d'une station de base avec laquelle s'associer peut donc détecter des stations de base potentiellement éloignées, et peut également transmettre des messages à une longue distance.

Pour garantir une sécurité minimale, la normalisation ETSI EN 300 444 a imposé un certain nombre de règles pour éviter les associations accidentelles et non désirées, notamment :
- Une action de l'utilisateur est impérative sur la station de base pour l'activer dans un mode de fonctionnement où elle est disponible pour une opération d'association et où elle peut recevoir des requêtes d'association de la part d'un terminal,
- La durée de cette activation est temporaire, et limitée à quelques dizaines de secondes,
- Dès qu'une opération d'association a été exécutée, la station de base repasse dans un mode où elle est indisponible pour une opération d'association et où elle ne peut répondre à la réception d'une requête de la part d'un terminal (bit a44 = 0),
- La station de base ne peut accepter que les requêtes d'association émanant de terminaux mobiles utilisant un code d'identification personnelle PIN convenu.

Ces règles ne vont pas dans le sens d'une simplification des opérations d'association.

Il existe également des procédés d'association par simple rapprochement des dispositifs à associer. Ceci est par exemple le cas de dispositifs utilisant la technologie dite "NFC Easy Connect" (Near Field Communication : communication par champ propre) qui permet l'association de deux appareils en utilisant une liaison NFC pour échanger les informations de connexion utilisées pour l'établissement de la communication principale par le réseau Bluetooth. Ce procédé, très simple, nécessite néanmoins l'utilisation de composants spécifiques pour permettre la mise en oeuvre de la liaison NFC.

On peut citer les documents d'art antérieur US 2010/048212 et US2009/093232 décrivant respectivement un procédé permettant de gérer l'émission d'un signal balise radio (« beacon » en anglais) pour un réseau de communication et un procédé de configuration de noeud d'un réseau de communication.

Le but de l'invention est de proposer un procédé d'association qui permette de simplifier considérablement cette procédure, notamment en supprimant les manipulations à effectuer par l'utilisateur sur la station de base et sur le terminal mobile.

Pour ce faire, la station de radiocommunication comporte des moyens pour émettre des signaux de balise qui servent à la transmission d'informations et à la synchronisation des terminaux de radiocommunication qui ont été préalablement associés. Certains de ces signaux de balise portent une information d'association qui signale la disponibilité ou non de la station de base pour exécuter une opération d'association.

Quant au terminal de radiocommunication, il comporte des moyens pour, à la réception d'un signal de balise comportant une information d'association montrant la disponibilité d'une station de radiocommunication émettrice dudit signal de balise, lancer l'exécution de ladite opération d'association avec ladite station de radiocommunication. La présente invention concerne un système de radiocommunication tel que défini par la revendication 1. Selon une autre caractéristique avantageuse de la présente invention, un terminal de radiocommunication comporte des moyens pour lancer l'exécution de ladite opération d'association avec une station de radiocommunication à la réception, d'une part, d'un signal de balise émis à puissance réduite qui comporte une information d'association signalant la disponibilité de ladite station de radiocommunication et, d'autre part, d'un signal de balise, émis à puissance non réduite par la même station de radiocommunication, qui comporte une information d'association signalant la non-disponibilité de ladite station de radiocommunication.

Selon une autre caractéristique avantageuse de la présente invention, un terminal de radiocommunication comporte des moyens pour discriminer, sur la base de la puissance reçue, les signaux de balise émis à puissance réduite et les signaux de balise émis à puissance non-réduite et pour lancer l'exécution des opérations d'association en sélectionnant si besoin celle des stations de radiocommunication qui a émis les signaux de balise à puissance réduite.

Selon une autre caractéristique avantageuse de la présente invention, un terminal de radiocommunication comporte des moyens pour comparer le niveau de puissance reçue d'un signal de balise portant une information d'association signalant que ladite station de radiocommunication est disponible pour mener une opération d'association à une valeur seuil et ne lancer l'exécution de ladite opération d'association avec ladite station de radio communication que si ledit niveau de puissance reçue est inférieur à ladite valeur seuil.

Selon une autre caractéristique avantageuse de la présente invention, chaque station de radiocommunication et/ou terminal de radiocommunication est pourvu de moyens pour que les échanges de messages lors des opérations d'association soient réalisés à puissance réduite.

Selon une autre caractéristique avantageuse de la présente invention, chaque station de radiocommunication est pourvue de moyens pour afficher un code et des moyens pour vérifier qu'un code transmis par un terminal de radiocommunication lors de l'exécution de l'opération d'association est identique au code affiché.

La présente invention peut s'appliquer à un système de radiocommunication, tel qu'il vient d'être décrit mais qui, de plus, est du type où les communications entre une station de radiocommunication et un terminal de radiocommunication se font par transmission de trames.

Dans ce cas, selon un premier mode de réalisation, une station de radio communication est prévue pour émettre à puissance réduite un signal de balise portant une information d'association signalant la disponibilité de ladite station de radiocommunication dans la même trame qu'un autre signal de balise émis à puissance non-réduite, portant une information d'association signalant la non-disponibilité de ladite station de radiocommunication.

Selon un autre mode de réalisation, une station de radiocommunication est prévue pour émettre cycliquement une série de signaux de balise portant une information d'association signalant la disponibilité ou non de ladite station de radiocommunication, au moins un signal de balise de ladite série étant un signal de balise, émis à puissance réduite, portant une information d'association signalant la disponibilité de ladite station de radiocommunication.

Selon une autre caractéristique avantageuse de la présente invention, une station de radiocommunication est prévue pour désactiver l'émission à puissance réduite des signaux de balise portant une information d'association signalant en permanence qu'elle est disponible pour mener une opération d'association.

Selon une autre caractéristique avantageuse de la présente invention, un terminal de radiocommunication est, avant association, dans un mode de recherche d'association dans lequel il recherche en permanence des signaux de balise dont l'information d'association signale la disponibilité d'une station de radiocommunication, lesdits signaux de balise étant émis à puissance réduite.

La présente invention concerne également une station de radiocommunication et un terminal de radiocommunication comme définis respectivement par les revendications 11 et 12. La présente invention concerne également un procédé d'association d'un terminal de radiocommunication avec une station de radiocommunication d'un système de radiocommunication tel que défini par la revendication 13. La présente invention concerne encore un programme inscrit sur un support et destiné à être chargé dans un dispositif programmable d'une station de radiocommunication tel qu'il vient d'être décrit, ledit programme comprenant des instructions ou parties de code pour permettre la mise en oeuvre des moyens de ladite station de radiocommunication lorsque ledit programme est exécuté par ledit dispositif programmable.

De même, la présente invention concerne un programme inscrit sur un support et destiné à être chargé dans un dispositif programmable d'un terminal de radiocommunication tel qu'il vient d'être décrit, ledit programme comprenant des instructions ou parties de code pour permettre la mise en oeuvre des moyens dudit terminal de radiocommunication lorsque ledit programme est exécuté par ledit dispositif programmable.

Les caractéristiques de l'invention mentionnées ci-dessous, ainsi que d'autres, apparaîtront plus clairement à la lecture de la description suivante d'exemples de réalisation, ladite description étant faite en relation avec les dessins joints, parmi lesquels :
La Fig. 1 est une vue d'un système de radiocommunication pourvu d'une station de radiocommunication et d'un terminal de radiocommunication selon la présente invention,
Les Figs. 2a et 2b sont des schémas illustrant l'émission de signaux de balise par une station de radiocommunication d'un système de radiocommunication selon deux modes de réalisation de la présente invention,
La Fig. 3 est une vue d'un système de radiocommunication pourvu de deux stations de radiocommunication et d'un terminal de radiocommunication selon la présente invention,
La Fig. 4 est un diagramme illustrant un procédé d'association selon la présente invention, et
Les Figs. 5a et 5b sont des schémas synoptiques respectivement d'une station de radiocommunication et d'un terminal de radiocommunication selon la présente invention.

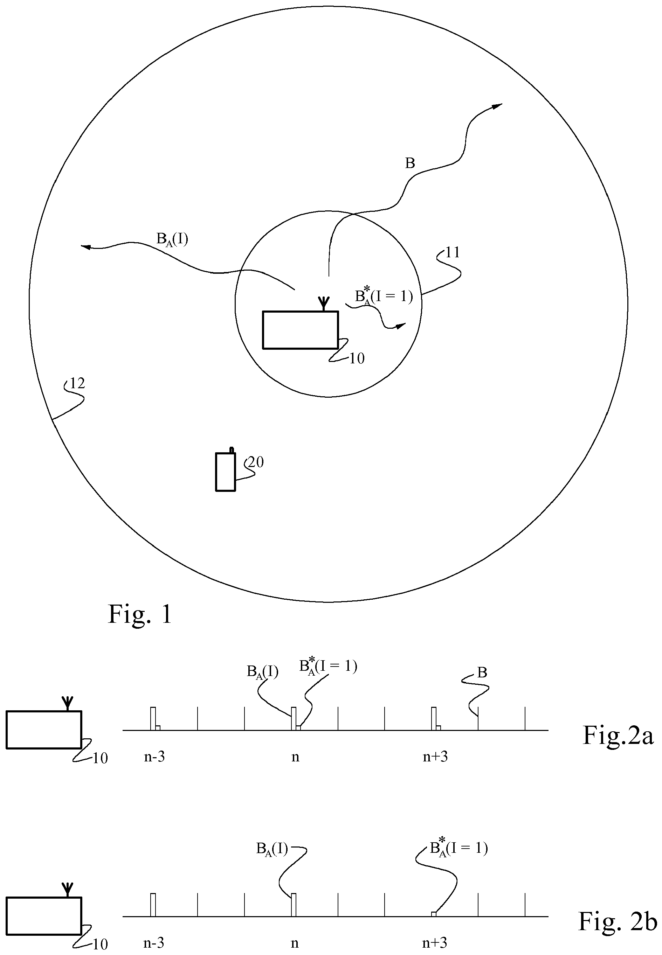

Le système de radiocommunication représenté à la Fig. 1 comprend une station de radiocommunication 10, telle qu'une station de base, et un terminal de radiocommunication 20, tel qu'un terminal mobile. Pour pouvoir communiquer l'un avec l'autre, ces deux dispositifs de radiocommunication doivent être associés, c'est-à-dire partager un certain nombre d'informations, telles que des clefs de sécurité et des identifiants qu'ils ont préalablement échangés et enregistrés lors d'une opération d'association.

La station de base 10 comporte des moyens pour émettre des signaux de balise B qui servent à la transmission d'informations et à la synchronisation des terminaux de radiocommunication, tels que le terminal 20, qui ont été préalablement associés. Certains de ces signaux de balise B_{A}(I) portent une information d'association I qui signale la disponibilité ou non de la station de base 10 pour exécuter une opération d'association.

Quant au terminal de radiocommunication 20, il comporte des moyens pour, à la réception d'un signal de balise B_{A}(I) comportant une information d'association montrant la disponibilité d'une station de radiocommunication 10 (par convention, on écrira I = 1 quand la station 10 est disponible et I = 0 lorsqu'elle ne l'est pas) émettrice dudit signal de balise B_{A}(I), lancer, s'il n'a pas déjà été associé avec la station de radiocommunication 10, l'exécution de ladite opération d'association avec ladite station de radiocommunication 10.

Comme déjà mentionné dans la partie introductive de la présente description, cette opération d'association comporte entre autres l'échange de messages contenant des informations, telles que des clefs de sécurité et des identifiants, et l'enregistrement de ces informations et d'autres dans la station de radiocommunication et dans le terminal. Ces identifiants et clefs de sécurité sont nécessaires à l'établissement de chacune des communications radio.

La station de radiocommunication 10 peut afficher un code d'identification et transmettre un message au terminal 20 pour que l'utilisateur tape le code affiché sur le terminal 20 (ce qui implique que le terminal 20 soit à proximité de la station 10, sans quoi l'utilisateur ne peut pas prendre connaissance du code affiché), lequel transmet le code tapé, la station de radiocommunication 10 vérifiant la concordance de ces codes et autorisant l'exécution des opérations d'association.

Selon la présente invention, les moyens d'émission de ladite station de radiocommunication 10 sont prévus pour émettre, à puissance réduite par rapport à la puissance d'émission des autres signaux de balise B, au moins certains desdits signaux de balise portant une information d'association (ils seront alors notés B*_{A}(I=1)). De plus, l'information d'association I desdits signaux de balise B^{*}_{A}(I=1) émis à puissance réduite par une station de radiocommunication 10 est telle que ladite information d'association I signale en permanence que ladite station de radiocommunication 10 est disponible pour mener une opération d'association (I = 1).

Dans le cas d'un système de radiocommunication DECT, les signaux de balise B émis par la station de base sont portés par un canal d'information système Q du service BMC. Les signaux de balise B_{A}(I) qui portent une information d'association portent des messages dits Q3 (En-tête H = 3) qui contiennent eux-mêmes l'information d'association I sous la forme d'un bit, dit bit a44 (I = a44).

Ainsi, selon la présente invention, au moins certains des signaux de balise portant des messages Q3, voire tous les signaux de balise portant des messages Q3, sont émis à puissance réduite et ont leur bit d'association a44 à 1.

La puissance d'émission réduite par rapport aux autres signaux de balise B permet de limiter les dimensions de la zone de couverture des signaux de balise concernés (voir cercle 11 sur la Fig. 1) à des dimensions largement inférieures aux dimensions (voir cercle 12 sur la Fig. 1) des autres signaux de balise B, notamment ceux permettant la synchronisation des terminaux à la station de base, et des signaux de balise B_{A}(I). Ainsi est définie la proximité à laquelle un terminal mobile 20 souhaitant s'associer (selon la présente invention) doit se tenir afin d'éviter d'avoir à lancer l'opération d'association par des manipulations sur la station de radiocommunication 10 et sur le terminal 20.

Cette puissance réduite pourra par exemple être obtenue en désactivant l'amplificateur d'émission, ou encore, en ne sélectionnant qu'un sous-ensemble des antennes habituellement utilisées pour la transmission, ou encore, en atténuant fortement le signal transmis au moyen de composants spécifiques. Pour information, la transmission d'une puissance inférieure à 20 µW permet de limiter la visibilité du signal de balise à quelques dizaines de centimètres.

Dans un premier mode de réalisation, tous les signaux de balise portant une information d'association sont émis à puissance réduite. Dans ce cas, un terminal 20 qui n'a pas été associé et qui se trouve sous la couverture de ces signaux de balise B*_{A}(I=1) (à l'intérieur du cercle 11) et qui est donc à proximité de la station de radiocommunication 10, lance automatiquement l'exécution de l'opération d'association, sans intervention de l'utilisateur.

Dans un autre mode de réalisation, seulement un certain nombre de signaux de balise B*_{A}(I=1) portant une information d'association sont émis à puissance réduite, les autres B_{A}(I) étant émis à la même puissance que les autres signaux de balise B.

Alors, un terminal mobile situé dans la zone de couverture des signaux de balise portant une information d'association émis à puissance réduite B^{*}_{A}(I=1), c'est-à-dire à proximité de la station de base 10 (à l'intérieur du cercle 11 à la Fig. 1), reçoit de cette station de radiocommunication 10, d'une part, ces signaux de balise B^{*}A(1=1) indiquant que celle-ci est disponible pour une opération d'association (I = 1) et qu'elle est apte à recevoir une requête d'association et, d'autre part, les autres signaux de balise B_{A}(I) portant une information d'association I laquelle indique qu'elle n'est pas disponible pour une opération d'association et qu'elle n'est donc pas apte à recevoir une requête d'association, à moins qu'un événement d'activation particulier, tel qu'un appui sur une touche particulière, une sélection particulière dans un menu, etc., a eu lieu. L'opération d'association peut alors être exécutée automatiquement.

Selon un mode de réalisation avantageux de la présente invention, un terminal mobile est prévu pour lancer l'exécution d'une opération d'association avec une station de radiocommunication 10 s'il a reçu de celle-ci, d'une part, un premier signal de balise à puissance réduite B^{*}_{A1} avec une information d'association (I = 1) signalant la disponibilité de cette station de radiocommunication 10 pour cette opération (dans le cas de la norme DCET, le bit a44 = 1) et, d'autre part, un second signal de balise B_{A1} à puissance non-réduite avec une information d'association (I = 0) signalant la non-disponibilité de cette même station de radiocommunication 10 pour cette opération (dans le cas de la norme DCET, le bit a44 = 1).

Quant à un terminal mobile, tel que le terminal 20 de la Fig. 1, situé à l'extérieur de la zone de couverture des signaux de balise B^{*}_{A}(I=1) portant une information d'association émis à puissance réduite mais quand même sous la couverture des autres signaux de balise B_{A}(I) portant une information d'association (donc, dans la zone comprise sur la Fig. 1 à l'extérieur du cercle 11 et à l'intérieur du cercle 12), il ne reçoit que ces derniers B_{A}(I) lui indiquant que la station de base 10 n'est pas disponible et ne peut recevoir une requête d'association, à moins qu'un événement d'activation particulier a eu lieu. Pour ce terminal, l'opération d'association ne peut être déclenchée que comme pour l'état de la technique, c'est-à-dire après l'occurrence d'un tel événement, comme une intervention de l'utilisateur par sélection d'une option dans un menu, pour l'appui d'une touche particulière, etc.

La présente invention peut être mise en oeuvre, en ajoutant une clef supplémentaire dans l'interface de gestion logicielle de la radio (API : Application Programming Interface). Cette clef supplémentaire pourra par exemple avoir un paramètre d'activation ou de désactivation de l'émission à puissance réduite des ou de certains signaux de balise portant une information d'association, permettant par exemple de sélectionner un mode de fonctionnement selon la présente invention ou au contraire un mode de fonctionnement selon l'état de la technique. Elle pourra également avoir un paramètre permettant de sélectionner la puissance radio à utiliser pour la transmission de ces signaux de balise, permettant ainsi de définir les dimensions de la zone de couverture de ces signaux de balise.

Dans un système de radiocommunication DECT, un signal de balise (dummy bearer) est transmis dans chaque trame TDMA (Time Division Multiple Access), avec un contenu différent à chaque trame. La norme ETSI EN 300 175-1 précise que le nombre de signaux de balise transmis par la station de base DECT doit être d'au moins un par trame TDMA, sans toutefois préciser de nombre maximal. Le choix des créneaux temporels (slot) et fréquentiels (canal) de ces signaux de balise est effectué par la station de base en fonction de son environnement radio.

Chacun de ces signaux de balise occupe dans la trame TDMA un emplacement temporel et fréquentiel différent. De plus, un message de type Qx est transmis par un signal de balise sur certaines trames définies. Un signal de balise contenant un message Q3 (celui qui contient le bit d'association, en l'occurrence le bit a44) est donc transmis de façon cyclique parmi l'ensemble des signaux de balise.

Ainsi, une station de radiocommunication émet cycliquement une série de signaux de balise B parmi laquelle au moins un signal de balise B*_{A}(I=1) et/ou B_{A}(I) porte une information d'association I.

Dans le cas où des signaux de balise B^{*}_{A}(I=1) portant une information d'association sont émis à puissance réduite et d'autres B_{A}(I) sont émis à puissance non-réduite, deux modes de réalisation sont envisageables.

Selon un premier mode de réalisation (voir Fig. 2a), la station de radiocommunication 10 est prévue pour émettre les signaux de balise B^{*}_{A}(I=1) portant une information d'association à puissance réduite dans la même trame (les trames n-3, n et n+3 à la Fig. 2a) que les signaux de balise B_{A}(I) portant une information d'association à puissance non-réduite. Ainsi, appliqué à la norme DECT, dans une même trame, se trouvent un signal de balise portant un message Q3 dont le bit a44 = 1 émis à puissance réduite et un signal de balise, émis à puissance non-réduite, portant un message Q3 dont le bit a44 est soit égal à 0, soit égal à 1 selon qu'un événement d'activation particulier a eu lieu précédemment ou pas.

Selon un second mode de réalisation (voir Fig. 2b), la station de radiocommunication 10 est prévue pour émettre cycliquement une série de signaux de balise portant une information d'assignation B*_{A}(I=1) et B_{A}(I) (dans l'exemple de la Fig. 2b, les trames n-3, n3 et n+3 forment une série), au moins un de ces signaux de balise étant un signal de balise B^{*}_{A}(I=1) émis à puissance réduite (émis dans la trame n+3). Chaque signal de balise est émis dans une trame distincte.

Ainsi, appliqué à la norme DECT, dans chaque trame d'une série de trames, se trouve un signal de balise, émis à puissance non-réduite, portant un message Q3 dont le bit a44 est soit égal à 0, soit égal à 1 si un événement d'activation particulier a eu lieu précédemment, à l'exception d'au moins une trame de ladite série de trames dans laquelle se trouve un signal de balise émis à puissance réduite portant un message Q3 dont le bit a44 = 1.

On notera qu'un terminal mobile situé en dehors de la zone de couverture du signal de balise émis à puissance réduite ne reçoit pas ce signal, et donc, pour la trame contenant ce signal de balise, il ne reçoit aucun signal de balise du tout. Il n'en perdra néanmoins pas la synchronisation avec la station de base car, selon la norme DECT, cette perte de synchronisation n'est effective qu'après la perte d'un nombre significatif de signaux de balise successifs.

Selon une autre caractéristique de l'invention, la station de base est pourvue de moyens pour, suite à au moins un événement particulier, désactiver la fonction d'association que permet le signal de balise émis à puissance réduite. Par exemple, cette fonction peut être désactivée par une action manuelle de l'utilisateur.

Elle peut être désactivée lorsque la mémoire de la station de base a atteint un niveau de remplissage au-delà duquel on considère que toute nouvelle association n'est pas souhaitable.

Elle peut également être désactivée lorsque le mode d'association utilisant le signal de balise à puissance non-réduite a été initié manuellement par l'utilisateur.

Elle peut également être désactivée en dehors d'une plage horaire prédéfinie, ou définie par l'utilisateur.

Elle peut également être désactivée au-delà d'une durée d'activation prédéfinie à partir d'un événement particulier, comme l'instant de mise sous-tension de la station de base, l'instant de réception d'un message particulier reçu d'un téléopérateur, l'instant d'activation d'une interface radio, ou l'instant de l'association d'un terminal mobile sur une autre interface radio.

Comme mentionné ci-dessus, grâce à la présente invention, il est possible de rendre l'opération d'association complètement automatique. Pour ce faire, le terminal 20 comporte des moyens pour activer, s'il n'a pas encore été associé avec une station de radiocommunication 10, un mode de recherche d'association dans lequel il recherche en permanence des signaux de balise B*_{A}(I=1) qui ont été émis à puissance réduite par une station de radiocommunication et dont l'information d'association I signale la disponibilité de cette station de radiocommunication.

Dans le cas où ledit terminal mobile est prévu pour lancer l'exécution d'une opération d'association avec une station de radiocommunication s'il a reçu de celle-ci un signal de balise B*_{A}(I=1) à puissance réduite avec une information d'association signalant la disponibilité de ladite station de radiocommunication ainsi qu'un signal de balise B_{A}(I=0) à puissance non-réduite avec une information d'association signalant la indisponibilité de la même station de radiocommunication, ce mode de recherche d'association impliquera également la recherche de signaux de balise B_{A}(I=0) qui ont été émis à puissance non-réduite par la même station de radiocommunication et dont l'information d'association signale l'indisponibilité de cette station de radiocommunication.

Cette activation dans un mode de recherche d'association est permanente mais avantageusement limitée dans le temps, notamment pour éviter une consommation excessive d'énergie, en particulier de la partie réceptrice de la partie radio du terminal considéré. Par exemple, l'activation permanente peut être permanente jusqu'à la finalisation de l'association du terminal avec une station de radiocommunication. Elle peut être déclenchée pour une durée déterminée lors des opérations d'initialisation du terminal (mise à l'heure, choix des sonneries...), ou lors de l'insertion des batteries du terminal. Elle peut également être permanente dans des périodes de temps cycliques jusqu'à la finalisation de l'association du terminal avec la station de radiocommunication (par exemple, 5 secondes de recherche toutes les minutes).

Selon une caractéristique de la présente invention, un terminal 20 comporte des moyens pour comparer le niveau de puissance reçue d'un signal de balise portant une information d'association (I) signalant que ladite station de radiocommunication (10) est disponible pour mener une opération d'association (par exemple, la donnée de niveau de signal reçu de la station de base appelée RSSI (Received Signal Strength Indication : indication de la puissance du signal reçu) donné par le signal RSSI)) à une valeur seuil et ne lancer l'exécution de ladite opération d'association avec ladite station de radiocommunication que si ledit niveau de puissance reçue est inférieur à ladite valeur seuil.

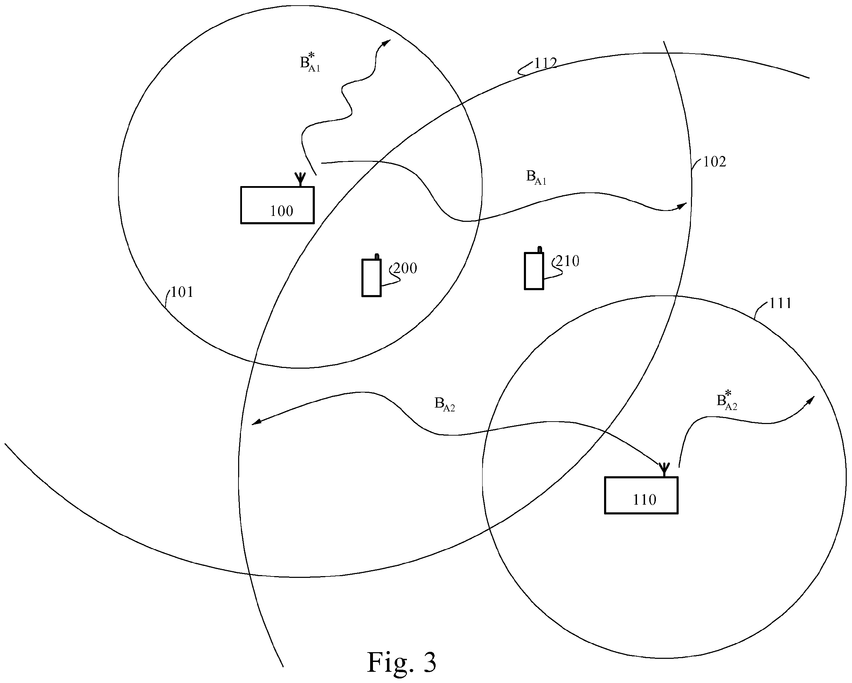

On a représenté à la Fig. 3, deux stations de radiocommunication 100 et 110 avec les zones de couverture 101 et 102, 111 et 112 respectives des signaux de balise émis à puissance réduite B^{*}_{A1} et B^{*}_{A2}, d'une part, et des signaux de balise à puissance non-réduite B_{A1} et B_{A2}, d'autre part.

Si un terminal, tel que le terminal mobile 200, se trouve sous la zone de couverture des signaux de balise B^{*}_{A1} émis à puissance réduite de la première station de radiocommunication 100, il reçoit en plus de ces signaux de balise B^{*}_{A1} qui signalent la disponibilité de la station de radiocommunication émettrice 100 pour exécuter une opération d'association, les signaux de balise B_{A1} émis à puissance non-réduite portant les mêmes informations que les précédentes, mais signalant l'indisponibilité de la même station de radiocommunication 100 pour exécuter une opération d'association. Il reçoit de plus les signaux de balise B_{A2} émis, par la station de radiocommunication 110, à puissance non-réduite et signalant l'indisponibilité de cette station de radiocommunication 110. Le terminal mobile 200 peut donc lancer l'exécution de l'opération d'association avec la station de radiocommunication 100.

Si, par contre, à l'instar du terminal mobile 210, il est placé à la fois sous les zones de couverture respectives des signaux de balise B_{A1} et B_{A2} respectivement émis à puissance non-réduite par les deux stations de base 100 et 110, mais pas dans la zone de couverture des signaux de balise B^{*}_{A1} et B^{*}_{A2} émis à puissance réduite par l'une ou l'autre des stations de radiocommunication 100 et 110, le terminal mobile 210 ne pourra pas lancer l'exécution de l'opération d'association.

Selon une caractéristique de la présente invention, un terminal mobile comporte des moyens pour discriminer, sur la base de la puissance reçue, les signaux de balise B^{*}_{A1}, B^{*}_{A2} émis à puissance réduite et les signaux de balise B_{A1} et B_{A2} émis à puissance non-réduite et pour lancer l'exécution des opérations d'association en sélectionnant, éventuellement s'il y en a plusieurs, celle des stations de radiocommunication 100, 110 qui a émis les signaux de balise B^{*}_{A} à puissance réduite. Dans l'exemple de la Fig. 3, le terminal 200 lancera l'exécution des opérations d'association avec la station de radiocommunication 100.

Par exemple, pour ce faire, ces moyens utilisent la donnée RSSI de niveau de signal reçu de la station de radiocommunication.

Pour améliorer la garantie de proximité de la station de radiocommunication 100 et du terminal mobile 200 pendant toute la durée de l'opération d'association, tous les échanges entre eux sont effectués en utilisant une puissance de transmission faible, de l'un et de l'autre, de l'ordre ou égale à la puissance de transmission du second signal de balise. Cela permet de s'affranchir d'une tentative d'association frauduleuse provenant d'un terminal mobile situé en dehors de la zone de proximité de cette station de base, et profitant du fait que cette dernière est dans un mode d'association activé.

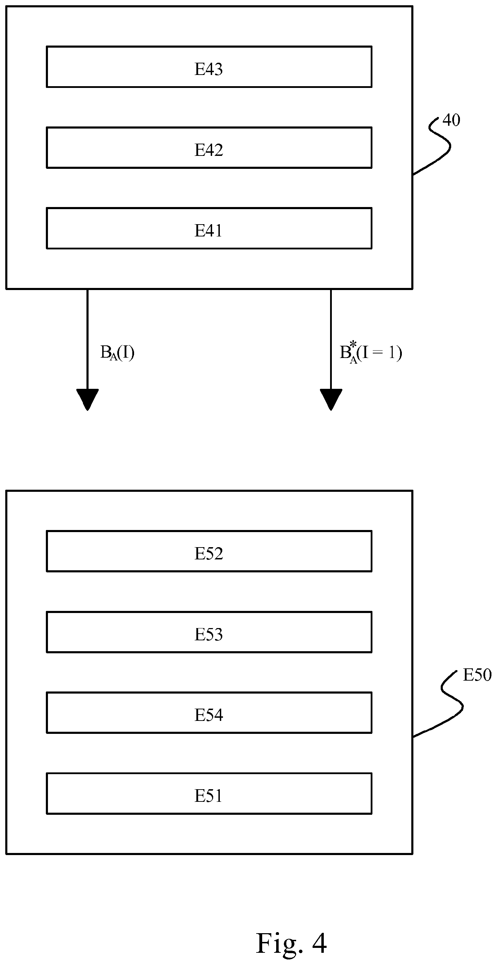

On a illustré à la Fig. 4, les étapes d'un procédé d'association d'un terminal de radiocommunication avec une station de radiocommunication selon la présente invention. Plus exactement, les étapes mises en oeuvre par une station de radiocommunication sont incluses à la Fig. 4 dans un rectangle 40 alors que celles qui sont mises en oeuvre par un terminal de radiocommunication sont incluses dans un rectangle 50.

Le procédé d'association selon l'invention comporte donc :
- une étape E41 d'émission par ladite station de radiocommunication de signaux de balise parmi lesquels au moins certains d'entre eux B^{*}_{A}(I=1) portent une information d'association (I = 1) signalant en permanence que ladite station de radiocommunication est disponible pour mener une opération d'association, lesdits signaux de balise B*_{A}(I=1) étant émis à puissance réduite par rapport à la puissance d'émission des autres signaux de balise, et
- à la réception par ledit terminal de radiocommunication d'un signal de balise B*_{A}(I=1) portant une information d'association émis à puissance réduite, une étape E51 de lancement de l'exécution de l'opération d'association proprement-dite.

Selon une caractéristique du procédé, l'étape E51 de lancement de l'exécution de l'opération d'association est mise en oeuvre à la réception E52, d'une part, d'un signal de balise B*_{A}(I=1) émis à puissance réduite qui comporte une information d'association signalant la disponibilité de ladite station de radiocommunication vis-à-vis de l'opération d'association et, d'autre part, d'un signal de balise B_{A}(I), émis à puissance non réduite par la même station de radiocommunication, qui comporte une information d'association signalant la non-disponibilité de ladite station de radiocommunication vis-à-vis de l'opération d'association.

Selon une caractéristique du procédé, ledit procédé d'association comporte une étape E53 de discrimination, sur la base de la puissance reçue, des signaux de balise B*_{A}(I=1) émis à puissance réduite et des signaux de balise B_{A}(I) émis à puissance non-réduite, l'étape E51 de lancement de l'exécution des opérations d'association sélectionnant si besoin est celle des stations de radiocommunication qui a émis les signaux de balise B^{*}_{A}(I=1) à puissance réduite.

Selon une caractéristique du procédé, ledit procédé d'association comporte une étape E54 de comparaison du niveau de puissance reçue à une valeur seuil et d'autorisation du lancement de l'exécution de ladite opération d'association avec ladite station de radiocommunication que si ledit niveau de puissance reçue est inférieur à ladite valeur seuil.

Selon une caractéristique du procédé, les étapes d'échanges de messages des opérations d'association sont réalisées à puissance réduite.

Selon une autre caractéristique du procédé, il comporte une étape E42 d'affichage d'un code sur la station de radiocommunication et de vérification qu'un code transmis par un terminal de radiocommunication lors de l'exécution de l'opération d'association est identique au code affiché.

Selon une autre caractéristique du procédé, il comporte une étape E43 de désactivation de l'émission à puissance réduite des signaux de balise portant une information d'association signalant en permanence qu'une station de radiocommunication est disponible pour mener une opération d'association.

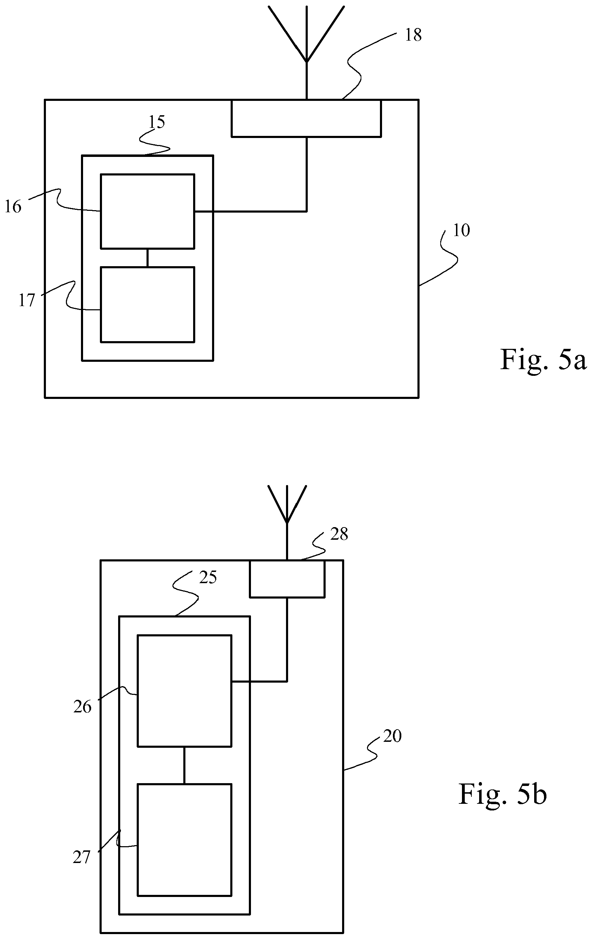

A la Fig. 5a, on a représenté une station de radiocommunication 10 qui est constituée, d'une part, d'un dispositif programmable 15, lui-même constitué d'une unité de commande 16 et d'une mémoire de programme 17 et, d'autre part, d'une interface de radiocommunication 18. Dans la mémoire de programme 17, est chargé un programme, par exemple préalablement inscrit sur un support approprié, qui comprend des instructions ou parties de code qui, lorsqu'il est exécuté par ledit dispositif programmable 15, met en oeuvre, en utilisant l'interface 18, les moyens précédemment décrits en relation avec une station de radiocommunication d'un système de radiocommunication, par exemple selon la Fig. 1. Selon une variante de réalisation, les moyens précédemment décrits en relation avec une station de radiocommunication d'un système de radiocommunication sont mis en oeuvre sous forme matérielle par un composant dédié, tel qu'un FPGA (Field-Programmable Gate Array) ou un ASIC (Application-Specific Integrated Circuit).

A la Fig. 5b, on a représenté un terminal de radiocommunication 20 qui est constitué, d'une part, d'un dispositif programmable 25, lui-même constitué d'une unité de commande 26 et d'une mémoire de programme 27 et, d'autre part, d'une interface de radiocommunication 18. Dans la mémoire de programme 27, est chargé un programme, par exemple préalablement inscrit sur un support approprié, qui comprend des instructions ou parties de code qui, lorsqu'il est exécuté par ledit dispositif programmable 15, met en oeuvre, en utilisant l'interface 28, les moyens précédemment décrits en relation avec un terminal de radiocommunication 20 d'un système de radiocommunication, par exemple selon la Fig. 1. Selon une variante de réalisation, les moyens précédemment décrits en relation avec un terminal de radiocommunication d'un système de radiocommunication sont mis en oeuvre sous forme matérielle par un composant dédié, tel qu'un FPGA (Field-Programmable Gate Array) ou un ASIC (Application-Specific Integrated Circuit).

## Revendications

1. Système de radiocommunication comprenant au moins une station de radiocommunication (10) et au moins un terminal de radiocommunication (20), ladite ou chaque station de radiocommunication (10) comportant des moyens pour émettre des signaux de balise (B, B_{A}, B^{*}_{A}), certains desdits signaux de balise (B_{A}) émis portant une information d'association (I) signalant la disponibilité ou non de ladite station de radiocommunication (10) pour exécuter une opération d'association, le terminal de radiocommunication (20) comportant des moyens pour, à la réception d'un signal de balise (B_{A}) comportant une information d'association (I = 1) montrant la disponibilité de la station de radiocommunication (10) qui a émis ledit signal de balise (B_{A}), lancer l'exécution de ladite opération d'association avec ladite station de radiocommunication (10), **caractérisé en ce que** lesdits moyens d'émission de ladite station de radiocommunication sont prévus pour émettre, à puissance réduite par rapport à la puissance d'émission des autres signaux de balise (B et B_{A}), au moins certains desdits signaux de balise (B^{*}_{A}) portant une information d'association (I = 1) signalant en permanence que ladite station de radiocommunication (10) est disponible pour mener une opération d'association.

2. Système de radiocommunication selon la revendication 1, **caractérisé en ce qu'**un terminal de radiocommunication (20) comporte des moyens pour lancer l'exécution de ladite opération d'association avec une station de radiocommunication (10) à la réception, d'une part, d'un signal de balise émis à puissance réduite (B^{*}_{A}) qui comporte une information d'association (I=1) signalant en permanence la disponibilité de ladite station de radiocommunication (10) et, d'autre part, d'un signal de balise (B_{A}), émis à puissance non réduite par la même station de radiocommunication (10), qui comporte une information d'association (I = 0) signalant la non-disponibilité de ladite station de radiocommunication (10).

3. Système de radiocommunication selon la revendication 1 ou 2, **caractérisé en ce qu'**un terminal de radiocommunication (20) comporte des moyens pour discriminer, sur la base de la puissance reçue, les signaux de balise (B^{*}_{A}) émis à puissance réduite et les signaux de balise (B_{A}) émis à puissance non-réduite et pour lancer l'exécution des opérations d'association en sélectionnant si besoin celle des stations de radiocommunication qui a émis les signaux de balise (B^{*}_{A}) à puissance réduite.

4. Système de radiocommunication selon une des revendications précédentes, caractérisé en qu'un terminal de radiocommunication (20) comporte des moyens pour comparer le niveau de puissance reçue d'un signal de balise portant une information d'association (I = 1) signalant que ladite station de radiocommunication (10) est disponible pour mener une opération d'association à une valeur seuil et ne lancer l'exécution de ladite opération d'association avec ladite station de radiocommunication (10) que si ledit niveau de puissance reçue est inférieur à ladite valeur seuil.

5. Système de radiocommunication selon une des revendications 1 à 4, **caractérisé en ce que** chaque station de radiocommunication (10) et/ou terminal de radiocommunication (20) est pourvu de moyens pour que les échanges de messages lors des opérations d'association soient réalisés à puissance réduite.

6. Système de radiocommunication selon une des revendications précédentes, **caractérisé en ce que** chaque station de radiocommunication (10) est pourvue de moyens pour afficher un code et des moyens pour vérifier qu'un code transmis par un terminal de radiocommunication (20) lors de l'exécution de l'opération d'association est identique au code affiché.

7. Système de radiocommunication selon une des revendications précédentes, du type où les communications entre une station de radiocommunication (10) et un terminal de radiocommunication (20) se font par transmission de trames, **caractérisé en ce qu'**une station de radiocommunication (10) est prévue pour émettre à puissance réduite un signal de balise (B^{*}_{A}) portant une information d'association (I = 1) signalant en permanence la disponibilité de ladite station de radiocommunication (10) dans la même trame qu'un autre signal de balise (B_{A}) émis à puissance non-réduite, portant une information d'association (I = 0) signalant la non-disponibilité de ladite station de radiocommunication (10).

8. Système de radiocommunication selon une des revendications 1 à 7, du type où les communications entre une station de radiocommunication (10) et un terminal de radiocommunication (20) se font par transmission de trames, **caractérisé en ce qu'**une station de radiocommunication (10) est prévue pour émettre cycliquement une série de signaux de balise (B_{A}) portant une information d'association (I) signalant la disponibilité ou non de ladite station de radiocommunication (10), au moins un signal de balise de ladite série étant un signal de balise (B^{*}_{A}), émis à puissance réduite, portant une information d'association (I = 1) signalant en permanence la disponibilité de ladite station de radiocommunication.

9. Système de radiocommunication selon une des revendications précédentes, **caractérisé en ce qu'**une station de radiocommunication (10) est prévue pour désactiver l'émission à puissance réduite des signaux de balise (B^{*}_{A}) portant une information d'association (I = 1) signalant en permanence qu'elle est disponible pour mener une opération d'association.

10. Système de radiocommunication selon une des revendications précédentes, **caractérisé en ce qu'**un terminal de radiocommunication (20) est, avant association, dans un mode de recherche d'association dans lequel il recherche en permanence des signaux de balise (B^{*}_{A}) dont l'information d'association (I = 1) signale en permanence la disponibilité d'une station de radiocommunication, lesdits signaux de balise étant émis à puissance réduite.

11. Station de radiocommunication d'un système de radiocommunication comprenant au moins ladite station de radiocommunication (10) et au moins un terminal de radiocommunication (20), ladite station de radiocommunication comportant des moyens pour émettre des signaux de balise (B, B_{A}, B^{*}_{A}), certains desdits signaux de balise (B_{A}) émis portant une information d'association (I) signalant sa disponibilité ou non pour exécuter une opération d'association, **caractérisé en ce que** lesdits moyens d'émission sont prévus pour émettre, à puissance réduite par rapport à la puissance d'émission des autres signaux de balise (B et B_{A}), au moins certains desdits signaux de balise (B^{*}_{A}) portant une information d'association (I = 1) signalant en permanence que ladite station de radiocommunication (10) est disponible pour mener une opération d'association.

12. Terminal de radiocommunication d'un système de radiocommunication comprenant au moins une station de radiocommunication (10), la station de radiocommunication (10) comprenant des moyens pour émettre des signaux de balise (B, B_{A}, B^{*}_{A}), certains desdits signaux de balise (B_{A}) émis portant une information d'association (I) signalant sa disponibilité ou non pour exécuter une opération d'association, et au moins ledit terminal de radiocommunication (20), ledit terminal de radiocommunication (20) comportant des moyens pour, à la réception d'un signal de balise (B_{A}) comportant une information d'association (I = 1) montrant la disponibilité d'une station de radiocommunication (10) qui a émis ledit signal de balise (B_{A}), lancer l'exécution de ladite opération d'association avec ladite station de radiocommunication (10), **caractérisé en ce qu'**il comporte des moyens pour lancer l'exécution de ladite opération d'association avec une station de radiocommunication (10) à la réception de celle-ci, d'une part, d'un signal de balise (B^{*}_{A}), émis à puissance réduite par rapport à la puissance d'émission des autres signaux de balise (B et B_{A}) qu'il reçoit, qui comporte une information d'association (I = 1) signalant en permanence la disponibilité de ladite station de radiocommunication (10) et, d'autre part, d'un signal de balise (B_{A}) émis à puissance non-réduite par la même station de radiocommunication (10), qui comporte une information d'association (I = 0) signalant la non-disponibilité de ladite station de radiocommunication (10).

13. Procédé d'association d'un terminal de radiocommunication avec une station de radiocommunication (10) d'un système de radiocommunication, **caractérisé en ce qu'**il comporte :
- une étape (E41) d'émission par ladite station de radiocommunication (10) de signaux de balise (B, B_{A}, B^{*}_{A}) parmi lesquels certains desdits signaux de balise (B_{A}) émis portant une information d'association (I) signalant la disponibilité ou non de ladite station de radiocommunication (10) pour exécuter une opération d'association, et au moins certains autres desdits signaux de balise (B^{*}_{A}) portent une information d'association (I=1) signalant en permanence que ladite station de radiocommunication est disponible pour mener une opération d'association, lesdits autres signaux de balise (B^{*}_{A}) étant émis à puissance réduite par rapport à la puissance d'émission des autres signaux de balise (B, B_{A}), et
- à la réception par ledit terminal de radiocommunication d'un signal de balise (B^{*}_{A}) portant ladite information d'association (I) émis à puissance réduite, une étape (E51) de lancement de l'exécution de l'opération d'association proprement-dite.

14. Procédé d'association selon la revendication 13, **caractérisé en ce que** l'étape (E51) de lancement de l'exécution de l'opération d'association est mise en oeuvre à la réception (E52), d'une part, d'un signal de balise B^{*}_{A} émis à puissance réduite qui comporte une information d'association (I = 1) signalant la disponibilité de ladite station de radiocommunication vis-à-vis de l'opération d'association et, d'autre part, d'un signal de balise B_{A}(I), émis à puissance non réduite par la même station de radiocommunication, qui comporte une information d'association (I = 0) signalant en permanence la non-disponibilité de ladite station de radiocommunication vis-à-vis de l'opération d'association.

15. Programme inscrit sur un support et destiné à être chargé dans un dispositif programmable (15) d'une station de radiocommunication (10) selon la revendication 11, ledit programme comprenant des instructions ou parties de code pour permettre la mise en oeuvre des moyens de ladite station de radiocommunication (10), lorsque ledit programme est exécuté par ledit dispositif programmable (15).

16. Programme inscrit sur un support et destiné à être chargé dans un dispositif programmable (25) d'un terminal de radiocommunication (20) selon la revendication 12, ledit programme comprenant des instructions ou parties de code pour permettre la mise en oeuvre des moyens dudit terminal de radiocommunication (20), lorsque ledit programme est exécuté par ledit dispositif programmable (25).

## Patentansprüche

1. Funkverbindungssystem, das mindestens eine Funkverbindungsstation (10) und mindestens ein Funkverbindungs-Endgerät (20) enthält, wobei die oder jede Funkverbindungsstation (10) Einrichtungen aufweist, um Bakensignale (B, B_{A}, B^{*}_{A}) zu senden, wobei bestimmte der gesendeten Bakensignale (B_{A}) eine Zuordnungsinformation (I) tragen, die die Verfügbarkeit oder nicht der Funkverbindungsstation (10) anzeigen, um einen Zuordnungsvorgang auszuführen, wobei das Funkverbindungs-Endgerät (20) Einrichtungen aufweist, um bei Empfang eines Bakensignals (B_{A}), das eine Zuordnungsinformation (I = 1) trägt, die die Verfügbarkeit der Funkverbindungsstation (10), die das Bakensignal (B_{A}) gesendet hat, anzeigt, die Ausführung des Zuordnungsvorgangs zu der Funkverbindungsstation (10) zu starten, **dadurch gekennzeichnet, dass** die Sendeeinrichtungen der Funkverbindungsstation vorgesehen sind, um bei reduzierter Leistung bezüglich der Sendeleistung der anderen Bakensignale (B und B_{A}) mindestens bestimmte der Bakensignale (B^{*}_{A}) zu senden, die eine Zuordnungsinformation (I = 1) tragen, die permanent anzeigt, dass die Funkverbindungsstation (10) zur Durchführung eines Zuordnungsvorgangs zur Verfügung steht.

2. Funkverbindungssystem nach Anspruch 1, **dadurch gekennzeichnet, dass** ein Funkverbindungs-Endgerät (20) Einrichtungen aufweist, um die Ausführung des Zuordnungsvorgangs zu einer Funkverbindungsstation (10) bei Empfang einerseits eines mit reduzierter Leistung gesendeten Bakensignals (B^{*}_{A}), das eine Zuordnungsinformation (I = 1) aufweist, die permanent die Verfügbarkeit der Funkverbindungsstation (10) anzeigt, und andererseits eines Bakensignals (B_{A}) zu starten, das mit nicht reduzierter Leistung durch die gleiche Funkverbindungsstation (10) gesendet wird, das eine Zuordnungsinformation (I = 0) aufweist, die die Nichtverfügbarkeit der Funkverbindungsstation (10) anzeigt.

3. Funkverbindungssystem nach Anspruch 1 oder 2, **dadurch gekennzeichnet, dass** ein Funkverbindungs-Endgerät (20) Einrichtungen aufweist, um auf der Basis der empfangenen Leistung die mit reduzierter Leistung gesendeten Bakensignale (B^{*}_{A}) und die mit nicht reduzierter Leistung gesendeten Bakensignale (B_{A}) zu unterscheiden, und um die Ausführung der Zuordnungsvorgänge zu starten, indem falls nötig diejenige der Funkverbindungstationen ausgewählt wird, die die Bakensignale (B^{*}_{A}) mit reduzierter Leistung gesendet hat.

4. Funkverbindungssystem nach einem der vorhergehenden Ansprüche, **dadurch gekennzeichnet, dass** ein Funkverbindungs-Endgerät (20) Einrichtungen aufweist, um den Pegel einer von einem Bakensignal, das eine Zuordnungsinformation (I = 1) trägt, die anzeigt, dass die Funkverbindungsstation (10) zur Verfügung steht, um einen Zuordnungsvorgang durchzuführen, empfangenen Leistung mit einem Schwellwert zu vergleichen, und die Ausführung des Zuordnungsvorgangs zur Funkverbindungsstation (10) nur dann zu starten, wenn der Pegel der empfangenen Leistung niedriger als der Schwellwert ist.

5. Funkverbindungssystem nach einem der Ansprüche 1 bis 4, **dadurch gekennzeichnet, dass** jede Funkverbindungsstation (10) und/oder Funkverbindungs-Endgerät (20) mit Einrichtungen versehen ist, damit die Nachrichtenaustauschvorgänge bei den Zuordnungsvorgängen mit reduzierter Leistung durchgeführt werden.

6. Funkverbindungssystem nach einem der vorhergehenden Ansprüche, **dadurch gekennzeichnet, dass** jede Funkverbindungsstation (10) mit Einrichtungen, um einen Code anzuzeigen, und mit Einrichtungen versehen ist, um zu überprüfen, dass ein von einem Funkverbindungs-Endgerät (20) bei der Ausführung des Zuordnungsvorgangs übertragener Code mit dem angezeigten Code identisch ist.

7. Funkverbindungssystem nach einem der vorhergehenden Ansprüche, von der Art, bei der die Übermittlungen zwischen einer Funkverbindungsstation (10) und einem Funkverbindungs-Endgerät (20) durch Rahmenübertragung erfolgen, **dadurch gekennzeichnet, dass** eine Funkverbindungsstation (10) vorgesehen ist, um mit reduzierter Leistung ein Bakensignal (B^{*}_{A}) zu senden, das eine Zuordnungsinformation (I = 1) trägt, die permanent die Verfügbarkeit der Funkverbindungsstation (10) im gleichen Rahmen wie ein anderes Bakensignal (B_{A}) anzeigt, das mit nicht reduzierter Leistung gesendet wird, das eine Zuordnungsinformation (I = 0) trägt, die die Nichtverfügbarkeit der Funkverbindungsstation (10) anzeigt.

8. Funkverbindungssystem nach einem der Ansprüche 1 bis 7, von der Art, bei der die Übermittlungen zwischen einer Funkverbindungsstation (10) und einem Funkverbindungs-Endgerät (20) durch Rahmenübertragung erfolgen, **dadurch gekennzeichnet, dass** eine Funkverbindungsstation (10) vorgesehen ist, um zyklisch eine Reihe von Bakensignalen (B_{A}) zu senden, die eine Zuordnungsinformation (I) tragen, die die Verfügbarkeit oder nicht der Funkverbindungsstation (10) anzeigt, wobei mindestens ein Bakensignal der Reihe ein mit reduzierter Leistung gesendetes Bakensignal (B^{*}_{A}) ist, das eine Zuordnungsinformation (I = 1) trägt, die permanent die Verfügbarkeit der Funkverbindungsstation anzeigt.

9. Funkverbindungssystem nach einem der vorhergehenden Ansprüche, **dadurch gekennzeichnet, dass** eine Funkverbindungsstation (10) vorgesehen ist, um das Senden mit reduzierter Leistung der Bakensignale (B^{*}_{A}) zu deaktivieren, die eine Zuordnungsinformation (I = 1) tragen, die permanent anzeigt, dass sie zur Verfügung steht, um einen Zuordnungsvorgang durchzuführen.

10. Funkverbindungssystem nach einem der vorhergehenden Ansprüche, **dadurch gekennzeichnet, dass** ein Funkverbindungs-Endgerät (20) vor der Zuordnung in einem Modus der Zuordnungssuche ist, in dem es permanent Bakensignale (B^{*}_{A}) sucht, deren Zuordnungsinformation (I = 1) permanent die Verfügbarkeit einer Funkverbindungsstation anzeigt, wobei die Bakensignale mit reduzierter Leistung gesendet werden.

11. Funkverbindungsstation eines Funkverbindungssystems, das mindestens die Funkverbindungsstation (10) und mindestens ein Funkverbindungs-Endgerät (20) enthält, wobei die Funkverbindungsstation Einrichtungen aufweist, um Bakensignale (B, B_{A}, B^{*}_{A}) zu senden, wobei bestimmte der gesendeten Bakensignale (B_{A}) eine Zuordnungsinformation (I) tragen, die ihre Verfügbarkeit oder nicht anzeigt, um einen Zuordnungsvorgang auszuführen, **dadurch gekennzeichnet, dass** die Sendeeinrichtungen vorgesehen sind, um bei reduzierter Leistung bezüglich der Sendeleistung der anderen Bakensignale (B und B_{A}) mindestens bestimmte der Bakensignale (B^{*}_{A}) zu senden, die eine Zuordnungsinformation (I = 1) tragen, die permanent anzeigt, dass die Funkverbindungsstation (10) zur Verfügung steht, um einen Zuordnungsvorgang durchzuführen.

12. Funkverbindungs-Endgerät eines Funkverbindungssystems, das mindestens eine Funkverbindungsstation (10), wobei die Funkverbindungsstation (10) Einrichtungen enthält, um Bakensignale (B, B_{A}, B^{*}_{A}) zu senden, wobei bestimmte der gesendeten Bakensignale (B_{A}) eine Zuordnungsinformation (I) tragen, die ihre Verfügbarkeit oder nicht zur Ausführung eines Zuordnungsvorgangs anzeigt, und mindestens das Funkverbindungs-Endgerät (20) enthält, wobei das Funkverbindungs-Endgerät (20) Einrichtungen aufweist, um bei Empfang eines Bakensignals (B_{A}), das eine Zuordnungsinformation (I = 1) aufweist, die die Verfügbarkeit einer Funkverbindungsstation (10) anzeigt, die das Bakensignal (B_{A}) gesendet hat, die Ausführung des Vorgangs der Zuordnung zur Funkverbindungsstation (10) zu starten, **dadurch gekennzeichnet, dass** es Einrichtungen aufweist, um die Ausführung des Zuordnungsvorgangs zu einer Funkverbindungsstation (10) bei Empfang von dieser einerseits eines Bakensignals (B^{*}_{A}), das mit reduzierter Leistung bezüglich der Sendeleistung der anderen Bakensignale (B und B_{A}), die es empfängt, gesendet wurde, das eine Zuordnungsinformation (I = 1) aufweist, die permanent die Verfügbarkeit der Funkverbindungsstation (10) anzeigt, und andererseits eines Bakensignals (B_{A}) zu starten, das mit nicht reduzierter Leistung von der gleichen Funkverbindungsstation (10) gesendet wird, das eine Zuordnungsinformation (I = 0) aufweist, die die Nichtverfügbarkeit der Funkverbindungsstation (10) anzeigt.

13. Zuordnungsverfahren eines Funkverbindungs-Endgeräts zu einer Funkverbindungsstation (10) eines Funkverbindungssystems, **dadurch gekennzeichnet, dass** es aufweist:
- einen Schritt (E41) des Sendens durch die Funkverbindungsstation (10) von Bakensignalen (B, B_{A}, B*_{A}), von denen bestimmte der gesendeten Bakensignale (B_{A}) eine Zuordnungsinformation (I) tragen, die die Verfügbarkeit oder nicht der Funkverbindungsstation (10) anzeigen, um einen Zuordnungsvorgang auszuführen, und mindestens bestimmte andere der Bakensignale (B^{*}_{A}) eine Zuordnungsinformation (I = 1) tragen, die permanent anzeigt, dass die Funkverbindungsstation zur Verfügung steht, um einen Zuordnungsvorgang durchzuführen, wobei die anderen Bakensignale (B^{*}_{A}) mit reduzierter Leistung bezüglich der Sendeleistung der anderen Bakensignale (B, B_{A}) gesendet werden, und
- bei Empfang durch das Funkverbindungs-Endgerät eines Bakensignals (B*_{A}), das die mit reduzierter Leistung gesendete Zuordnungsinformation (I) trägt, einen Schritt (E51) des Startens der Ausführung des eigentlichen Zuordnungsvorgangs.

14. Zuordnungsverfahren nach Anspruch 13, **dadurch gekennzeichnet, dass** der Schritt (E51) des Startens der Ausführung des Zuordnungsvorgangs bei Empfang (E52), einerseits, eines mit reduzierter Leistung gesendeten Bakensignals B*_{A}, das eine Zuordnungsinformation (I = 1) aufweist, die die Verfügbarkeit der Funkverbindungsstation gegenüber dem Zuordnungsvorgang anzeigt, und andererseits eines Bakensignals B_{A}(I) durchgeführt wird, das von der gleichen Funkverbindungsstation mit nicht reduzierter Leistung gesendet wird, das eine Zuordnungsinformation (I = 0) aufweist, die permanent die Nichtverfügbarkeit der Funkverbindungsstation gegenüber dem Zuordnungsvorgang anzeigt.

15. Programm, das auf einen Träger aufgezeichnet und dazu bestimmt ist, in eine programmierbare Vorrichtung (15) einer Funkverbindungsstation (10) nach Anspruch 11 geladen zu werden, wobei das Programm Codeanweisungen oder -teile enthält, um die Anwendung der Einrichtungen der Funkverbindungsstation (10) zu erlauben, wenn das Programm von der programmierbaren Vorrichtung (15) ausgeführt wird.

16. Programm, das auf einen Träger aufgezeichnet und dazu bestimmt ist, in eine programmierbare Vorrichtung (25) eines Funkverbindungs-Endgeräts (20) nach Anspruch 12 geladen zu werden, wobei das Programm Codeanweisungen oder -teile enthält, um die Anwendung der Einrichtungen des Funkverbindungs-Endgeräts (20) zu erlauben, wenn das Programm von der programmierbaren Vorrichtung (25) ausgeführt wird.

## Claims

1. Radio-communication system comprising at least one radio-communication station (10) and at least one radio-communication terminal (20), said or each radio-communication station (10) comprising sending means for sending beacon signals (B), some of said sent beacon signals (B_{A}, B_{A}, B^{*}_{A}) carrying association information (I) indicating the availability or not of said radio-communication station (10) for executing an association operation, the radio-communication terminal (20) comprising means for, on reception of a beacon signal (B_{A}) comprising association information (I = 1) showing the availability of the radio-communication station (10) that sent said beacon signal (B_{A}), initiating the execution of said association operation with said radio-communication station (10), **characterised in that** said sending means of said radio-communication station are configured to send, at reduced power compared with the transmit power of the other beacon signals (B and B_{A}), at least some of said beacon signals (B^{*}_{A}) carrying association information (I = 1) indicating continuously that said radio-communication station (10) is available for performing an association operation.

2. Radio-communication system according to claim 1, **characterised in that** a radio-communication terminal (20) comprises means for initiating the execution of said association operation with a radio-communication station (10) on reception firstly of a beacon signal sent at reduced power (B^{*}_{A}) that comprises association information (I = 1) indicating continuously the availability of said radio-communication station (10) and secondly a beacon signal (B_{A}) sent at non-reduced power by the same radio-communication station (10), that comprises association information (I = 0) indicating the non-availability of said radio-communication station (10).

3. Radio-communication system according to claim 1 or 2, **characterised in that** a radio-communication terminal (20) comprises means for distinguishing, on the basis of the received power, the beacon signals (B^{*}_{A}) sent at reduced power and the beacon signals (B_{A}) sent at non-reduced power and for initiating the execution of the association operations by selecting if necessary the radio-communication station that sent the beacon signals (B^{*}_{A}) at reduced power.

4. Radio-communication system according to one of the preceding claims, **characterised in that** a radio-communication terminal (20) comprises means for comparing the received power level of a beacon signal carrying association information (I = 1) indicating that said radio-communication station (10) is available for performing an association operation at a threshold value and initiating the execution of said association operation with said radio-communication station (10) only if said received power level is lower than said threshold value.

5. Radio-communication system according to one of claims 1 to 4, **characterised in that** each radio-communication station (10) and/or radio-communication terminal (20) is provided with means for the message exchanges during association operations to be performed at reduced power.

6. Radio-communication system according to one of the preceding clams, **characterised in that** each radio-communication station (10) is provided with means for displaying a code and means for checking that a code transmitted by a radio-communication terminal (20) when the association operation is executed is identical to the displayed code.

7. Radio-communication system according to one of the preceding claims, of the type where the communications between a radio-communication station (10) and a radio-communication terminal (20) take place by transmission of frames, **characterised in that** a radio-communication station (10) is configured to send at reduced power a beacon signal (B^{*}_{A}) carrying association information (I = 1) indicating continuously the availability of said radio-communication station (10) in the same frame as another beacon signal (B_{A}) sent at non-reduced power, carrying association information (I = 0) indicating the non-availability of said radio-communication station (10).

8. Radio-communication system according to one of claims 1 to 7, of the type where the communications between a radio-communication station (10) and a radio-communication terminal (20) take place by the transmission of frames, **characterised in that** a radio-communication station (10) is configured to cyclically send a series of beacon signals (B_{A}) carrying association information (I) indicating the availability or not of said radio-communication station (10), at least one beacon signal in said series being a beacon signal (B^{*}_{A}) sent at reduced power, carrying association information (I = 1) continuously indicating the availability of said radio-communication station.

9. Radio-communication system according to one of the preceding claims, **characterised in that** a radio-communication station (10) is configured to deactivate the transmission at reduced power of the beacon signals (B^{*}_{A}) carrying association information (I = 1) indicating continuously that it is available for performing an association operation.

10. Radio-communication system according to one of the preceding claims, **characterised in that** a radio-communication terminal (20) is, before association, in an association-seeking mode in which it continuously seeks beacon signals (B^{*}_{A}), the association information (I = 1) of which indicates continuously the availability of a radio-communication station, said beacon signals being sent at reduced power.

11. Radio-communication station in a radio-communication system comprising at least said radio-communication station (10) and at least one radio-communication terminal (20), said radio-communication station comprising sending means for sending beacon signals (B, B_{A}, B^{*}_{A}), some of said beacon signals (B_{A}) sent carrying association information (I) indicating its availability or not for executing an association operation, **characterised in that** said sending means are configured to send, at reduced power compared with the sending power of the other beacon signals (B and B_{A}), at least some of said beacon signals (B^{*}_{A}) carrying association information (I = 1) indicating continuously that said radio-communication station (10) is available for performing an association operation.

12. Radio-communication terminal in a radio-communication system comprising at least one radio-communication station (10), the radio-communication station (10) comprising sending means for sending beacon signals (B, B_{A}, B^{*}_{A}), some of said beacon signals (B_{A}) sent carrying association information (I) indicating its availability or not for executing an association operation, and at least said radio-communication terminal (20), said radio-communication terminal (20) comprising means for initiating, on reception of a beacon signal (B_{A}) comprising association information (I = 1) showing the availability of a radio-communication station (10) that has sent said beacon signal (B_{A}), the execution of said association operation with said radio-communication station (10), **characterised in that** it comprises means for initiating the execution of said association operation with a radio-communication station (10) on reception therefrom firstly of a beacon signal (B^{*}_{A}), sent at reduced power compared with the transmit power of the other beacon signals (B and B_{A}) that it receives, which comprises association information (I = 1) indicating continuously the availability of said radio-communication station (10), and secondly a beacon signal (B_{A}) sent at non-reduced power by the same radio-communication station (10), which comprises association information (I = 0) indicating the non-availability of said radio-communication station (10).

13. Method for associating a radio-communication terminal with a radio-communication station (10) in a radio-communication system, **characterised in that** it comprises:
- a step (E41) of sending, by said radio-communication station (10), beacon signals (B, B_{A}, B^{*}_{A}) among which some of said beacon signals (B_{A}) sent carrying association information (I) indicating the availability or not of said radio-communication station (10) for executing an association operation, and at least some others said beacon signals (B^{*}_{A}) carry association information (I = 1) continuously indicating that said radio-communication station is available for performing an association operation, said others beacon signals (B^{*}_{A}) being sent at reduced power compared with the transmit power of the other beacon signals (B, B_{A}),, and
- on reception by said radio-communication terminal of a beacon signal (B^{*}_{A}) carrying said association information (I) sent at reduced power, a step (E51) of initiating the execution of the association operation per se.

14. Association method according to claim 13, **characterised in that** the step (E51) of initiating the execution of the association operation is performed on reception (E52) firstly of a beacon signal B^{*}_{A} sent at reduced power which comprises association information (I = 1) indicating the availability of said radio-communication station vis-à-vis the association operation, and secondly of a beacon signal B_{A}(I), sent at non-reduced power by the same radio-communication station, which comprises association information (I = 0) indicating continuously the non-availability of said radio-communication station vis-à-vis the association operation.

15. Program recorded on medium and intended to be loaded into a programmable device (15) of a radio-communication station (10) according to claim 11, said program comprising instructions or code parts to allow implementing the means of said radio-communication station (10) when said program is executed by said programmable device (15).

16. Program recorded on a medium and intended to be loaded into a programmable device (25) of a radio-communication terminal (20) according to claim 12, said program comprising instructions or code parts to allow implementing the means of said radio-communication terminal (20) when said program is executed by said programmable device (25).
